# EUROPEAN PATENT APPLICATION

(11) **EP 4 783 535 A1**
(43) Date of publication of application: **29.07.2026**
(21) Application number: 25153648.8
(22) Date of filing: 23.01.2025
(51) Int. Cl.: H04L 45/00, H04L 61/5084, H04L 67/10, H04L 67/101

(54) **METHODS, ARCHITECTURES, APPARATUSES AND SYSTEMS FOR SENSING PROCESSING MOBILITY WITH COMPUTING-AWARE TRAFFIC STEERING**

(71) Applicant: InterDigital Patent Holdings, Inc., Wilmington, DE 19809 (US)
(72) Inventor: BERNARDOS, Carlos Jesus, 28922 MADRID (ES); MOURAD, Alain, ASCOT, SL5 9PA (GB); SARATHCHANDRA, Magurawalage Chathura Madhusanka, LONDON, E33DT (GB); ROBITZSCH, Sebastian, LONDON, N8 7FL (GB)
(74) Representative: AWA Sweden AB

(57) **Abstract**

Procedures, methods, architectures, apparatuses, systems, devices, and computer program products for sensing processing mobility with computing-aware traffic steering. A wireless transmit-receive unit (WTRU) in a network discovers candidate points of attachment (PoAs), in the network for a distributed task where one or more functions hosted by one or more second WTRUs. The WTRU transmits one or more computing-aware traffic steering (CATS) query messages to the one or more candidate PoAs, and receives one or more replies. The WTRU determines a PoA from the one or more candidate PoAs, for attachment of the first WTRU. The WTRU operates a change of the PoA of the first WTRU to the determined PoA and obtains an IP address from the determined PoA. The WTRU signals the obtained IP address to the one or more second WTRUs, and signals that handover of the first WTRU to the determined PoA has been completed.

## Description

### BACKGROUND

The present disclosure is generally directed to the fields of processing mobility, including, for example, to methods, architectures, apparatuses, systems related to sensing processing mobility and computing-aware traffic steering.

### SUMMARY

There are disclosed embodiments of methods, as described in the following and as claimed in the appended claims.

There are disclosed embodiments of a device, as described in the following and as claimed in the appended claims.

### BRIEF DESCRIPTION OF THE DRAWINGS

A more detailed understanding may be had from the detailed description below, given by way of example in conjunction with drawings appended hereto. Figures in such drawings, like the detailed description, are examples. As such, the Figures (FIGs.) and the detailed description are not to be considered limiting, and other equally effective examples are possible and likely. Furthermore, like reference numerals ("ref. ") in the FIGs. indicate like elements, and wherein:
FIG. 1A is a system diagram illustrating an example communications system;
FIG. 1B is a system diagram illustrating an example wireless transmit/receive unit (WTRU) that may be used within the communications system illustrated in FIG. 1A;
FIG. 1C is a system diagram illustrating an example radio access network (RAN) and an example core network (CN) that may be used within the communications system illustrated in FIG. 1A;
FIG. 1D is a system diagram illustrating a further example RAN and a further example CN that may be used within the communications system illustrated in FIG. 1A;
FIG. 2 illustrates a use first case for sensing applications, i.e., related to pedestrian/animal intrusion detection.
FIG. 3 illustrates a second use case for sensing applications, related to intruder detection;
FIG. 4 shows monostatic versus bistatic sensing;
FIG. 5 is an exemplary network topology wherein a sensing application is deployed;
FIG. 6 shows an example of sensing processing mobility in the network topology of FIG. 5;
FIG. 7 is a sequence chart showing exemplary signaling of sensing processing mobility using computing-aware traffic steering; and
FIG. 8 is a flow chart of a method for processing mobility according to an embodiment.

### DETAILED DESCRIPTION

### Abbreviations and acronyms

- 5G: Fifth-Generation
- 5GC: 5G Core (Network)
- 5GS: 5G System
- ACK: Acknowledge
- AN: Access Network
- BS: Base Station
- CATS: Computing-Aware Traffic Steering
- ID/id: Identifier
- IETF: Internet Engineering Task Force
- IP: Internet Protocol
- ISAC: Integrated Sensing and Communications
- ISF: Integrated Sensing Function
- OAM: Operations, Administration and Management
- PoA: Point of Attachment
- PREOF: Packet Replication, Elimination, and Ordering Functions
- RA: Router Advertisement
- RAN: Radio Access Network
- SA: Service and System Aspects (3GPP, specification of service requirements and overall 3GPP system architecture)
- SP: Sensing Processing (function)
- S: Sensor (function)
- UAV: Unmanned Aerial Vehicle
- V2X: Vehicle-to-everything
- UE: User Equipment
- WG: Working Group
- WTRU: Wireless Transmit-Receive Unit

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein. Although various embodiments are described and/or claimed herein in which an apparatus, system, device, etc. and/or any element thereof carries out an operation, process, algorithm, function, etc. and/or any portion thereof, it is to be understood that any embodiments described and/or claimed herein assume that any apparatus, system, device, etc. and/or any element thereof is configured to carry out any operation, process, algorithm, function, etc. and/or any portion thereof.

### Example Communications System

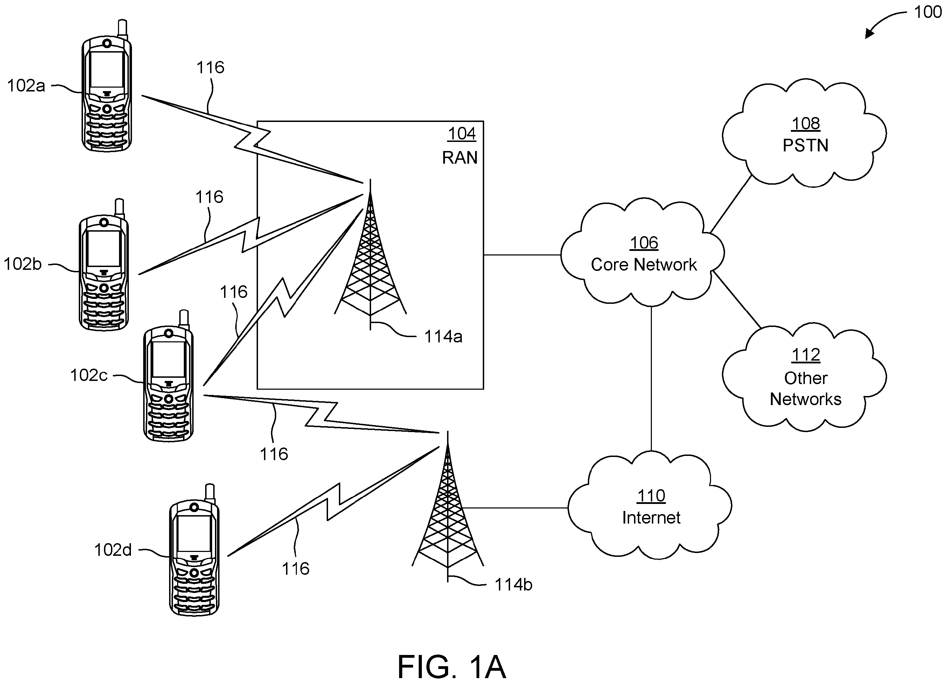

The methods, apparatuses and systems provided herein are well-suited for communications involving both wired and wireless networks. An overview of various types of wireless devices and infrastructure is provided with respect to FIGs. 1A-1D, where various elements of the network may utilize, perform, be arranged in accordance with and/or be adapted and/or configured for the methods, apparatuses and systems provided herein.

FIG. 1A is a system diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail (ZT) unique-word (UW) discreet Fourier transform (DFT) spread OFDM (ZT UW DTS-s OFDM), unique word OFDM (UW-OFDM), resource block-filtered OFDM, filter bank multi carrier (FBMC), and the like.

As shown in FIG. 1A, the communications system 100 may include wireless transmit/receive units (WTRUs) 102a, 102b, 102c, 102d, a radio access network (RAN) 104/113, a core network (CN) 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include (or be) a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d, e.g., to facilitate access to one or more communication networks, such as the CN 106/115, the Internet 110, and/or the networks 112. By way of example, the base stations 114a, 114b may be any of a base transceiver station (BTS), a Node-B (NB), an eNode-B (eNB), a Home Node-B (HNB), a Home eNode-B (HeNB), a gNode-B (gNB), a NR Node-B (NR NB), a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in an embodiment, the base station 114a may include three transceivers, i.e., one for each sector of the cell. In an embodiment, the base station 114a may employ multiple-input multiple output (MIMO) technology and may utilize multiple transceivers for each or any sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In an embodiment, the base station 114a and the WTRUs 102a, 102b, 102c may implement radio technologies such as IEEE 802.11 (i.e., Wireless Fidelity (Wi-Fi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node-B, Home eNode-B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In an embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In an embodiment, the base station 114b and the WTRUs 102c, 102d may utilize a cellular-based RAT (e.g., WCDMA, CDMA2000, GSM, LTE, LTE-A, LTE-A Pro, NR, etc.) to establish any of a small cell, picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing an NR radio technology, the CN 106/115 may also be in communication with another RAN (not shown) employing any of a GSM, UMTS, CDMA 2000, WiMAX, E-UTRA, or Wi-Fi radio technology.

The CN 106/115 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/114 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

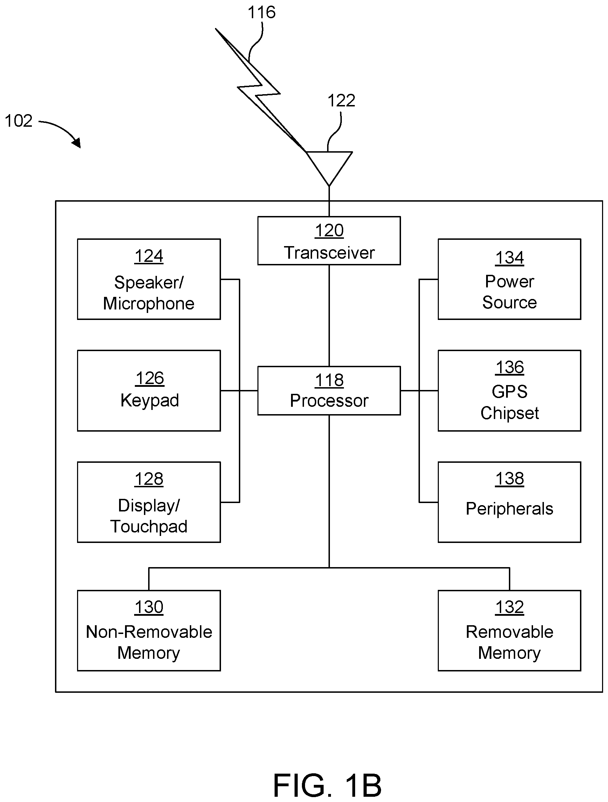

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other elements/peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together, e.g., in an electronic package or chip.

The transmit/receive element 122 may be configured to transmit signals to, or receive signals from, a base station (e.g., the base station 114a) over the air interface 116. For example, in an embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In an embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. For example, the WTRU 102 may employ MIMO technology. Thus, in an embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other elements/peripherals 138, which may include one or more software and/or hardware modules/units that provide additional features, functionality and/or wired or wireless connectivity. For example, the elements/peripherals 138 may include an accelerometer, an e-compass, a satellite transceiver, a digital camera (e.g., for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a virtual reality and/or augmented reality (VR/AR) device, an activity tracker, and the like. The elements/peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the uplink (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the uplink (e.g., for transmission) or the downlink (e.g., for reception)).

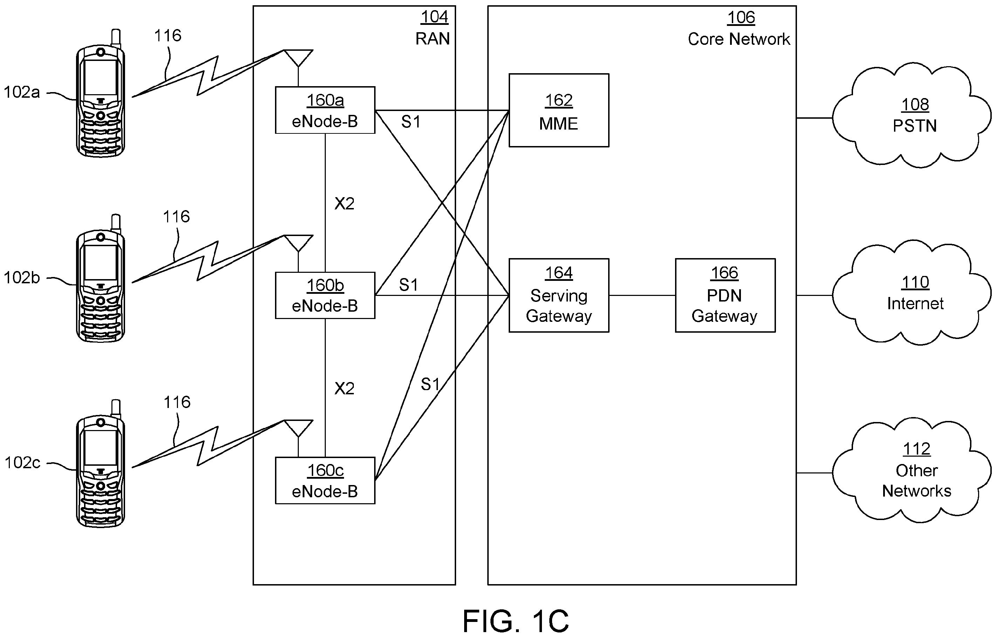

FIG. 1C is a system diagram illustrating the RAN 104 and the CN 106 according to an embodiment. As noted above, the RAN 104 may employ an E-UTRA radio technology to communicate with the WTRUs 102a, 102b, and 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In an embodiment, the eNode-Bs 160a, 160b, 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink (UL) and/or downlink (DL), and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While each of the foregoing elements are depicted as part of the CN 106, it will be appreciated that any one of these elements may be owned and/or operated by an entity other than the CN operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode-Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode-B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGs. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in infrastructure basic service set (BSS) mode may have an access point (AP) for the BSS and one or more stations (STAs) associated with the AP. The AP may have an access or an interface to a distribution system (DS) or another type of wired/wireless network that carries traffic into and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier sense multiple access with collision avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High throughput (HT) STAs may use a 40 MHz wide channel for communication, for example, via a combination of the primary 20 MHz channel with an adjacent or nonadjacent 20 MHz channel to form a 40 MHz wide channel.

Very high throughput (VHT) STAs may support 20 MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse fast fourier transform (IFFT) processing, and time domain processing, may be done on each stream separately. The streams may be mapped on to the two 80 MHz channels, and the data may be transmitted by a transmitting STA. At the receiver of the receiving STA, the above-described operation for the 80+80 configuration may be reversed, and the combined data may be sent to a medium access control (MAC) layer, entity, etc.

Sub 1 GHz modes of operation are supported by 802.11af and 802.11ah. The channel operating bandwidths, and carriers, are reduced in 802.11af and 802.11ah relative to those used in 802.11n, and 802.1 1ac. 802.11af supports 5 MHz, 10 MHz and 20 MHz bandwidths in the TV white space (TVWS) spectrum, and 802.11ah supports 1 MHz, 2 MHz, 4 MHz, 8 MHz, and 16 MHz bandwidths using non-TVWS spectrum. According to a representative embodiment, 802.11 ah may support meter type control/machine-type communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or network allocation vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11 ah is 6 MHz to 26 MHz depending on the country code.

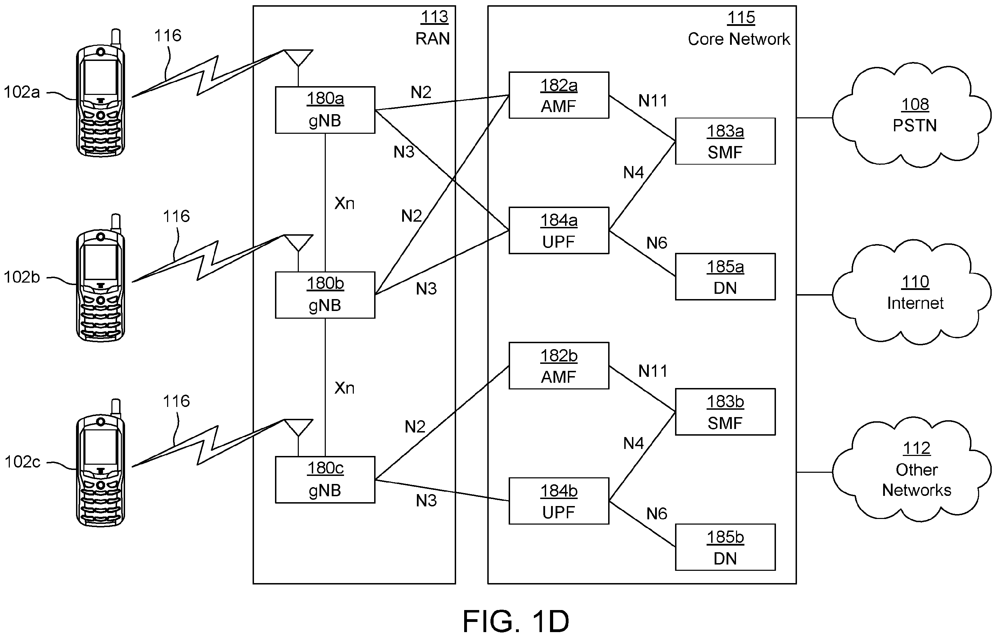

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In an embodiment, the gNBs 180a, 180b, 180c may implement MIMO technology. For example, gNBs 180a, 180b may utilize beamforming to transmit signals to and/or receive signals from the WTRUs 102a, 102b, 102c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., including a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards user plane functions (UPFs) 184a, 184b, routing of control plane information towards access and mobility management functions (AMFs) 182a, 182b, and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one session management function (SMF) 183a, 183b, and at least one Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of NAS signaling, mobility management, and the like. Network slicing may be used by the AMF 182a, 182b, e.g., to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as Wi-Fi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, e.g., to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In an embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to any of: WTRUs 102a-d, base stations 114a-b, eNode-Bs 160a-c, MME 162, SGW 164, PGW 166, gNBs 180a-c, AMFs 182a-b, UPFs 184a-b, SMFs 183a-b, DNs 185a-b, and/or any other element(s)/device(s) described herein, may be performed by one or more emulation elements/devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

### Introduction

In this document are defined new procedures for a device providing sensing processing/computing, connected to a mobile network, and being part of a distributed sensing group, to change its point of attachment to the network, while maintaining the connectivity to the rest of the devices of the sensing group, and ensuring that the network and computing requirements associated to the sensing service are not impacted. A network architecture inspired in the IETF CATS is used as an exemplary solution.

Definition of terms used:
(Distributed) Sensing Group: a group of devices participating on a sensing task.
Sensing Traffic: traffic used (after some processing) to generate a sensing result.
Sensing Processing Function: a function processing sensing traffic (potentially from different sources) to generate a sensing result (or something that can be further processed to generate a sensing result).
Sensing Signal: radio signal used in the processing.
Sensor Function: function running on a device participating on a sensing task that generates and/or processes a sensing signal.
CATS Agent: logical entity performing a function related to computing-aware traffic steering.

### Overview

### Integrated Sensing and Communications (ISAC)

A study in 3GPP SA1 discusses integrated sensing use cases and potential requirements for enhancements in the 5G system. Such enhancements may provide sensing services addressing different target verticals/applications (e.g., autonomous/assisted driving, V2X, UAVs, 3D map, smart city, smart home, factories, healthcare, maritime sector).

For integrated sensing, there may be a process of collecting sensing measurement data which is data collected about radio/wireless signals impacted (e.g., reflected, refracted, diffracted) by an object or environment of interest for sensing purposes, and for deriving sensing results from processing sensing measurement data. If there is an area defined for sensing, sensing service area location, which is an area location whether with or without obstacle, the 5G system may provide sensing service with certain quality.

The study also considers other N3GPP entities. Those sensing measurement data are considered as transparent to 5GS such that those data are communicated using a standard protocol to an interface defined by the 5GS.

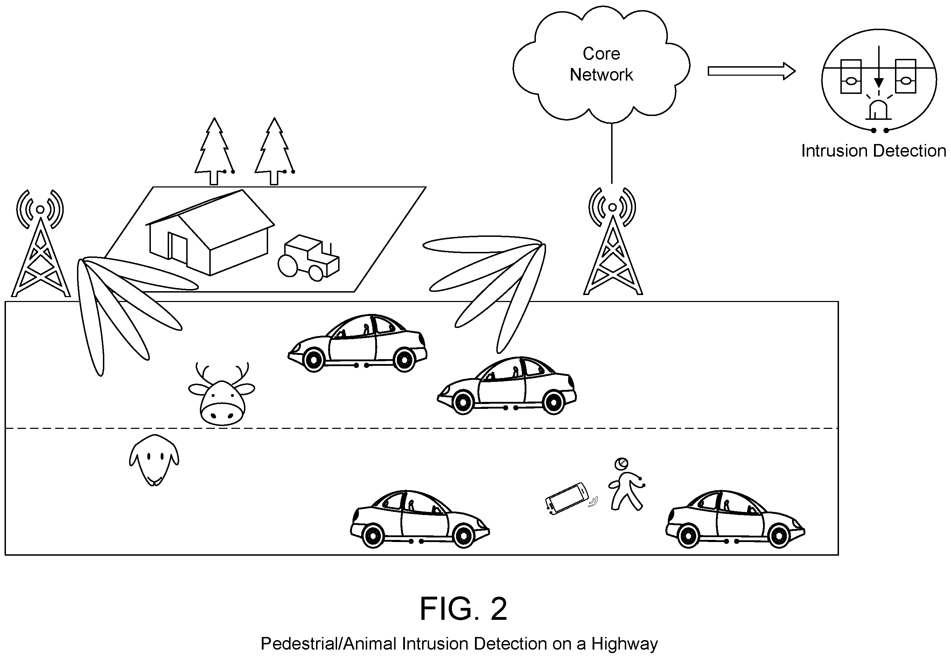

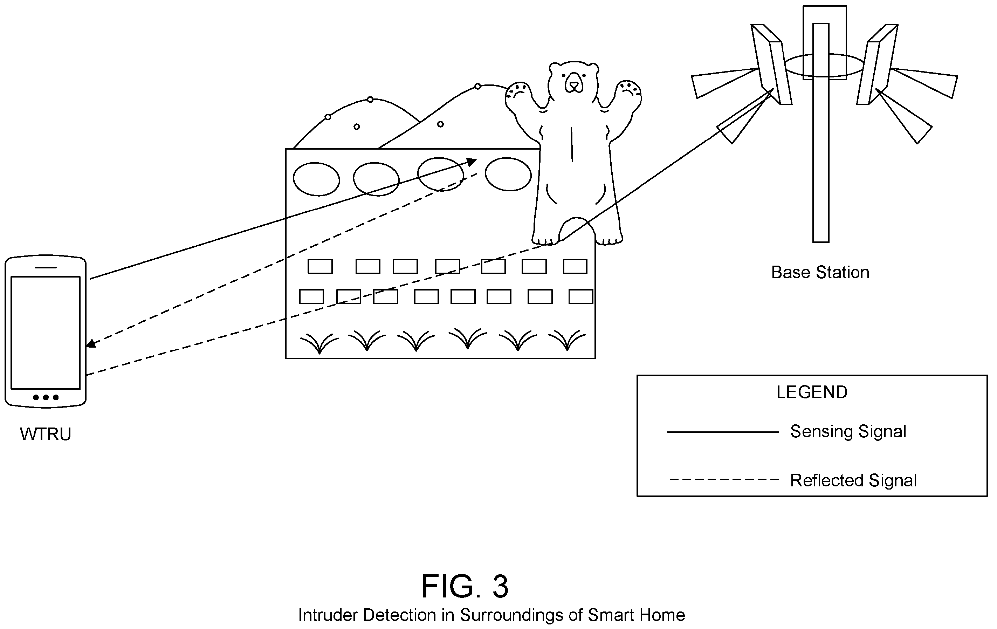

One use case for integrated sensing is object detection for example pedestrian/animal intrusion detection on a highway (see **Figure 2**) or intruder detection (see **Figure 3**) in surroundings of a smart home, for example.

In these scenarios, the RAN node/BS or WTRU can detect the intrusion in the sensing area of a base station by itself or in collaboration between WTRU and BS. Sensing measurements are then transferred to the network and further processed into the sensing result.

Another use case for integrated sensing is transparent sensing in which sensing data is captured by the WTRU and communicated so that 5GS is aware of the sensing information.

In this scenario, WTRU may acquire sensing measurements from different 3GPP and non-3GPP devices. And 5GC may determine various available sensing services by processing collated sensing data.

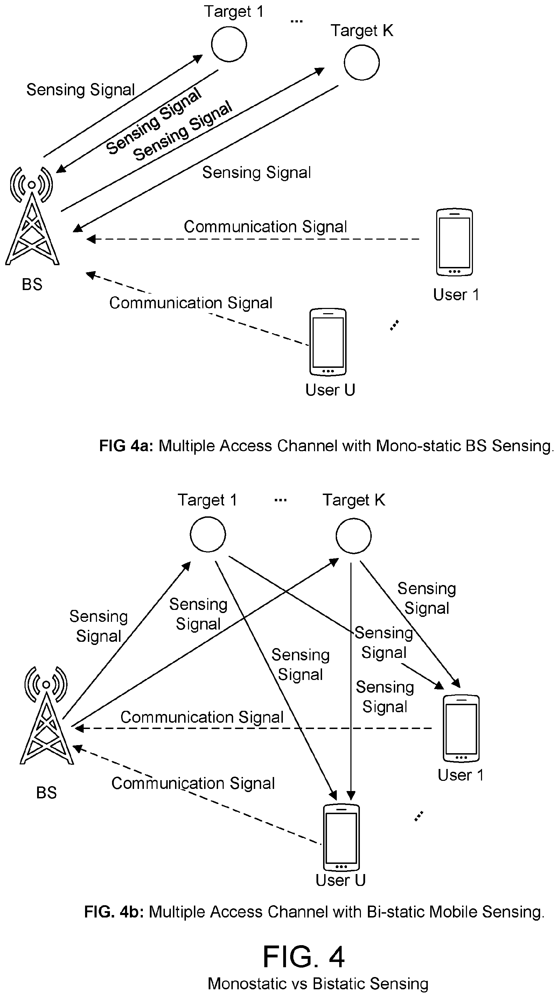

There are various modes of sensing. For example, two most discussed are (see **Figure 4**), 1) monostatic sensing (Figure 4a) - sensing signal sender and the receiver are the same node, and 2) bi-static sensing (Figure 4b) - sensing signal sender and sensing signal receiver are two different nodes. Multi-static sensing is also a mode of sensing currently considered.

SENSOR FUSION: association of Sensor Streams and Coordination of Sensor Operations for Synchronous Sensor Fusion

Mechanisms are described that enable synchronous on-device sensor fusion. Mechanisms are described to enable using multiple data sources/sensors for sensing the same environment, by combining (fusing) data from these sensors in such a way that sensing results intelligible. For example, in complementary sensor fusion, each sensor node may sense only a partial view of the whole scene, containing different features. In another example, in cooperative Fusion combines different modes of sensing data into new information that is typically more complex than the original information. To be able to consistently combine different streams into one fused result, sensing processes, components, and procedures, they much be synchronized to be able to identify correctly and efficiently inter-related (e.g., temporally) data from different sensor streams.

Procedures are described to associate one or more sensor streams for synchronization. Mechanisms are defined to enable the synchronization of correlated information and sensing operations across multiple nodes.

These references introduce a new logical entity: the Integrated Sensing Function (ISF), responsible of configuring and triggering distributed sensing performed by a group of sensors.

### COMPUTE AND TRAFFIC STEERING (CATS)

The IETF CATS WG addresses the problem of how the network infrastructure can steer traffic between clients of a service and sites offering the service, considering both network metrics (such as bandwidth and latency), and compute metrics (such as processing, storage capabilities, and capacity).

This might be particularly useful for use cases such integrated sensing and communications, where there are scenarios in which the sensing computation (e.g., sensor fusion) cannot be performed by the sensor itself due to compute limitations. In these scenarios, both delay and the computing resources required for running the sensing service are relevant.

An architecture for CATS may be based on IP anchoring and mechanisms are described for service mobility. While it may be assumed that the location (site) where services are deployed is stationary and on the network infrastructure, the present disclosure describes and discloses embodiments where a sensing processing/computing function is hosted on a mobile terminal (a UE/WTRU or `site').

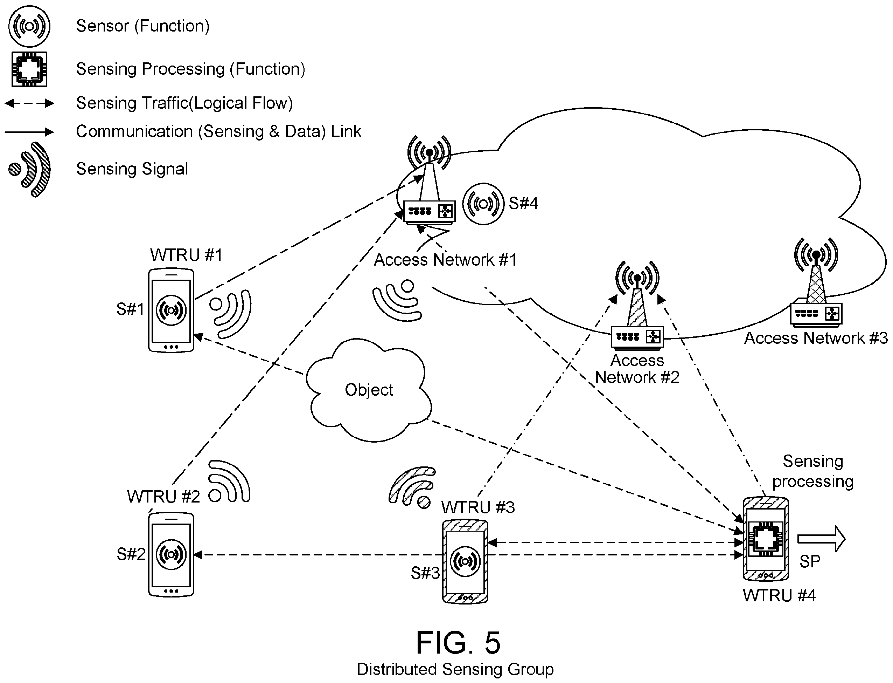

**Figure 5** shows an exemplary scenario. There is a distributed sensing task (e.g., requested by an Application or a Network Function). This involves four sensor functions (three hosted at WTRUs: sensor function S#1 at WTRU #1, sensor function S#2 at WTRU #2 and sensor function S3 at WTRU #3, and one hosted at the RAN: sensor function S#4 at Access Network #1) and a sensing processing function (SP hosted at WTRU #4). The selection of the composition of the sensing group is out of the scope of this disclosure, but procedures may be used wherein selection and coordination is performed by an ISF. The sensors might be of the same or different technology and might be connected to the same RAN or different ones (which might also be of different access technologies). In this example, we have the following configuration:

Three sensor (S) functions hosted at WTRUs: S#1@WTRU#1, S#2@WTRU#2 and S#3@WTRU#3.

One sensor function hosted at the access network (AN): S#4@AN#1.

A sensing processing (SP) function is hosted at a WTRU: SP@WTRU#4.

Access Networks are of different technology: AN#1 is 3GPPP and AN#2 is WiFi. There is also a third AN (AN#3) which is also a WiFi one.

WTRU#1 and WTRU#2 are connected to AN#1. WTRU#3 and WTRU#4 are connected to AN#2.

Since some of the sensors and the sensing processing function are mobile, a mobility event (e.g., a change of point of attachment of the WTRU hosting the sensing processing function, from AN#2 to AN#3) triggers updates of the connectivity and traffic steering used to forward the sensing data between the sensors and the sensing processing function.

Conventional distributed sensing systems do not have the capability to support mobility of sensor devices and/or of the sensing processing function involved in distributed sensing. Enablers are needed to update the traffic steering accounting jointly for the networking and computing requirements associated with the sensing traffic.

Conventional distributed sensing solutions do not consider mobility of a device hosting a sensing processing function. Mobility solutions supporting sensing processing mobility and jointly considering computing and networking requirements are missing.

Embodiments are disclosed and described that propose to enable devices (such as a WTRU) hosting a sensing processing function to be mobile and change its point of attachment to the network, while meeting the requirements in terms of computing and networking associated with the sensing service.

Within this context, it is, for example, explored what mechanisms are needed to support mobility of a sensing processing device participating in a distributed sensing task that has its own associated connectivity and computing requirements.

### ENABLING SENSING PROCESSING MOBILITY FOR CATS

There are sensing scenarios and use cases that involve a distributed sensing task, in which one or multiple sensors participate, and that requires a supporting sensing service (e.g., fusing sensing measurements from different sensors and computing the sensing result). This sensing service needs to be executed by some kind of sensing processing/computing function, which might be hosted on a device that may be mobile (e.g., a terminal/User Equipment). The sensing service demands connectivity and computing requirements that are necessary to properly operate (and to timely deliver the sensing results).

The distributed task needs to be set up and the different participants (sensors and required sensing processing units) need to be selected. Both the sensors and processing functions might be on the move (be moving) and could therefore change their respective points of attachment to the network. This requires mobility procedures that are aware of the associated sensing requirements in terms of latency and computing.

We assume that the architecture supporting this scenario is based on CATS, though the solution can be generalized to scenarios based on other architectures.

It is also assumed that:
There is an active distributed sensing task, involving one or more multiple sensors attached to the mobile network;
At least one mobile sensing processing function which is executing a required sensing service (e.g., sensing fusion), is also attached to the mobile network;
The sensing service has a predefined set of requirements in terms of latency (between the sensors and the processing unit) and computing capabilities (of the sensing unit).

### Steps:

In a first step, the sensing processing function or an external controlling entity (e.g., an ISF) determines an IP prefix and traffic steering rules for the ongoing distributed sensing task.

In a second step, devices involved in the distributed sensing task receive a configuration (e.g. from the network) including the IP prefix and traffic steering rules anchored by the sensing processing function.

In a third step, the nodes participating in the distributed sensing task exchange traffic over IP tunnels on an overlay, applying the configured traffic steering according to the associated requirements to the tunneled traffic.

In a fourth step, the sensing processing function, and the sensors, might move relative to each other. This might trigger changes in the IP tunnels used to exchange the traffic and in the way the traffic is steered. In this case, the IP tunnels are updated (i.e., the end-points, as a result of a change of the topological IP addresses allocated to the sensors and/or the sensing processing unit as a result of a change of point of attachment). The device hosting the sensing processing function moves to a different point of attachment, e.g., due to physical mobility of the sensor. This requires updating the IP tunnels and the traffic steering to follow the current location of the sensing terminal.

In a fifth step, in some cases, the mobility referred above might also trigger a reconfiguration of the distributed sensing task.

Next is described an example of operation and signaling for a mobile device hosting a sensing processing function to support mobility (i.e., change of point of attachment) while meeting the connectivity and computing requirements associated to the sensing service.

A new functionality, site mobility, is defined for a CATS agent. Site mobility deals with the procedures required to:

Detect or predict a change of the current conditions due to a change in the point of attachment, jointly considering computing and networking, requiring of a service-hosting device (e.g., a device hosting a sensing processing function) mobility operation.

Decide whether a change of service instance location is needed, and, if so, signaling it to the appropriate network entity (e.g., the ISF) to trigger the service migration.

Perform the required signaling to ensure traffic is not disrupted as a result of the change of point of attachment (e.g., IP tunnel(s) update(s) and traffic steering modifications).

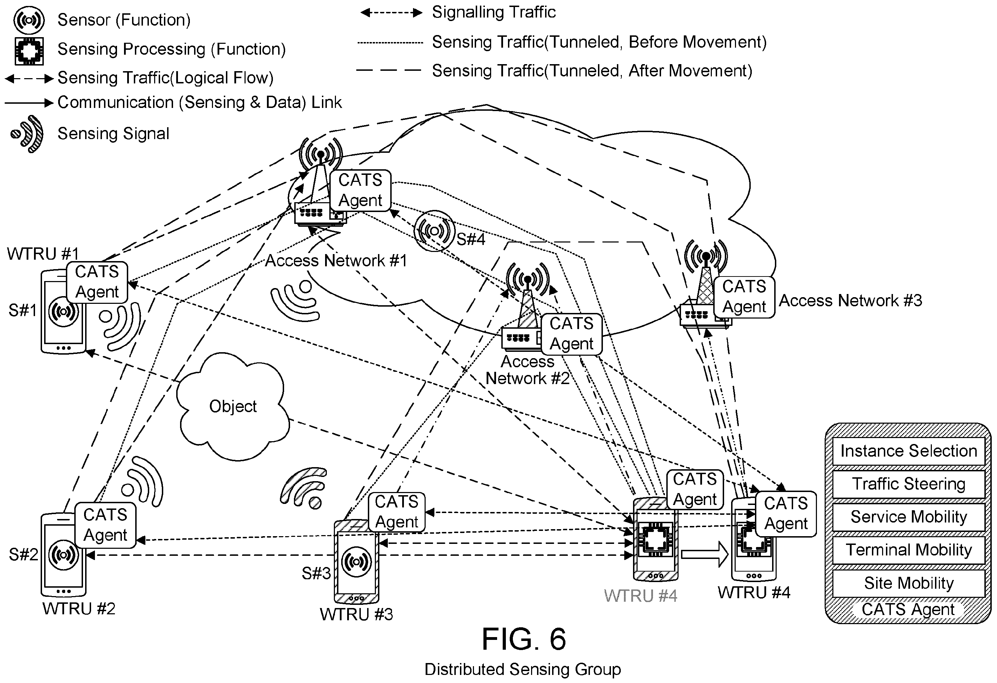

Figure 6 shows an example of sensing processing mobility in the exemplary network topology of Figure 5.

Additionally, the procedures presented herein enable temporary change of PoA. For example, the WTRU might decide to change PoA to a more "costly/expensive" network (e.g.., with better capabilities), for a limited time to send data that require high bandwidth. Then, it may change PoA back to the initial PoA to continue its initial operation.

In some scenarios, where the WTRU has connectivity to more than one access network (AN), they may be assigned 'Primary' and 'Secondary' roles. For example, the secondary ANs may be used for establishing temporary PoAs.

### SENSING PROCESSING MOBILITY IN A CATS ENVIRONMENT

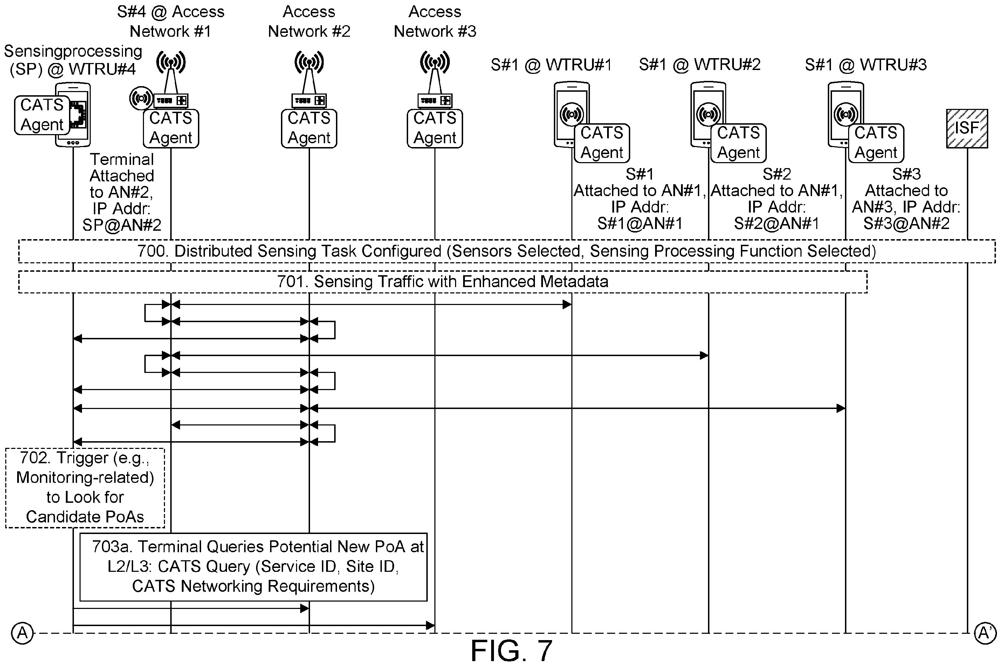

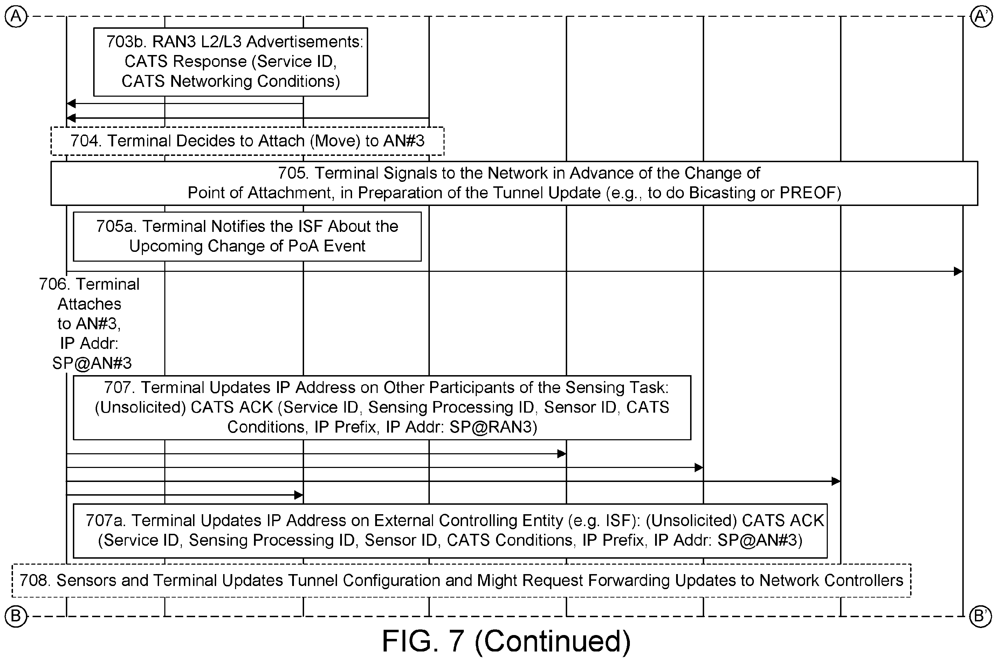

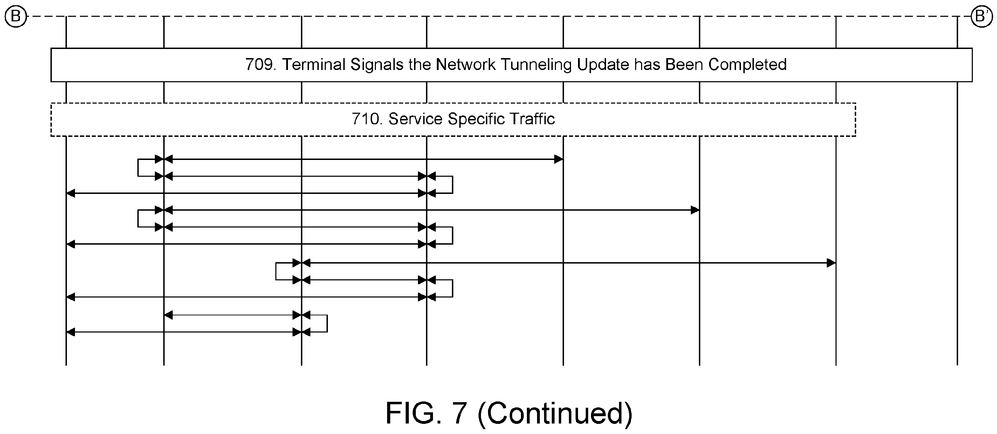

In this embodiment, sensing processing function mobility is enabled, using a CATS-alike deployment as exemplary reference. Note that the embodiment is not limited to CATS deployments and similar approaches may be used. While we refer to the support of mobility for a sensing processing function, this can be applied as well to other types of services, and this is why we can also refer to it as "site mobility", as the solution enables the mobility of a device (site) hosting a given service. Extensions and new behavior are highlighted. Note that variations are possible over the exemplary signaling diagram of **Figure 7****.**

In step 700, there is a distributed sensing task ongoing, which has been previously set up. This setup involves selecting the sensors (i.e., network locations hosting the sensing functions; in this example WTRU#1, WTRU#2, WTRU#3 and AN#1) that are part of the sensing task and selecting the sensing processing function (i.e., network location hosting the sensing processing function; in this example WTRU#4) in charge of processing the sensing data.

The sensing processing function imposes its own requirements in terms of connectivity with the sensors, but also of computing capacity required for the sensing data processing (e.g., sensor fusion).

In terms of the distributed sensing task and the connection of the participating entitities:
Each participating device has an IP (topological) address configured from the respective (access) networks it is attached to (probably benefitting from a local breakout approach to avoid too high network latencies. "Local breakout approach" meaning here that the anchor of the IP address is not localized deep in the core network, but close to the RAN.);
In addition to the topological IP address, each function participating on the sensing task (i.e., sensors and processing functions) is provided with an IP prefix (anchored at the processing function) to configure an IP address to use for the sensing-related communications. This facilitates mobility management in case any of the nodes change its point of attachment;
Sensing data traffic may be tunneled between the sensing functions and the sensing processing function, using the topological IP addresses of the devices hosting the functions as outer-header end-points. The use of IP-in-IP tunneling facilitates applying traffic handling policies to the packets as well as makes transparent the mobility to the actual sensing-related functions. This might be configured by an external controlling entity, such as the ISF.

Next are described different steps involved to support the mobility of the device hosting the sensing processing function, while ensuring that the requirements posed by the processing function are met for the particular distributed sensing task that is currently running.

In step 701, one or more of the devices participating in the distributed sensing task may actively monitor the quality of the connection (e.g., using in-situ OAM or other types of telemetry/monitoring). This can help detect if the quality is degrading and approaching a level that is not good enough for the sensing service.

Each device that is participating in the telemetry/monitoring may embed relevant information into the tunneling headers of the data packets transporting the sensing data (i.e. in-situ OAM) to support this task. Some examples of possible data items that can be included are:
Sensing service tag/id;
Timestamps, used to monitor latency;
Sensing type labels (to prioritize traffic from specific types of sensors over others), etc;
Sensing-quality related metadata, to aid recipients assessing if a sensing function is capable of perform as required.

In step 702, the measured sensing service conditions or pure mobility reasons (e.g., detecting new neighbor points of an attachment) may trigger the device hosting the sensing processing function to look for (discover/discovery) candidate Points of Attachment (PoAs).

In step 703, the device hosting the sensing processing function may start searching for information allowing to proactively prepare the distributed sensing task for an update due to the mobility of the sensing processing function:
The device may send CATS query messages to potential PoAs that are within reach. These query messages may include certain information regarding connectivity requirements of the sensing service (e.g., max latency of communication to a given IP address) so the candidate PoA can measure it and provide estimations as part of the CATS response. This message may indicate whether the new PoA is intended to be used on a temporary basis (and related parameters, e.g., time duration for the temporary use);
The candidate PoAs may respond with a CATS response message. This may be done through L2 (e.g., 802.11 Probe Requests and Probe Responses) or L3 (e.g., Router Solicitation and Router Advertisement) messages.
According to an embodiment, the discovery of candidate PoAs for proactively preparing for the distributed sensing task may be triggered based on the measured sensing conditions, based on a quality of connectivity with the one or more devices participating in the distributed sensing task dropping below a threshold.

In step 704, based on the received information on the CATS response messages, the device hosting the sensing processing function may decide to change its PoA from AN#2 to AN#3.

In step 705, before moving, the device hosting the sensing processing function prepares the network for the imminent handover. This might involve, as non-limiting examples: (i) setting up (configuring) bicasting in the network so the (sensing) data is duplicated (e.g., for a limited amount of time) to the current location (PoA to which the device is currently attached) and the upcoming one (PoA to which the device will be attached) (identified by the current and new topological IP addresses); (ii) configuring the transport network to perform PREOF (Packet Replication, Elimination, and Ordering Functions, RFC 8655) to minimize the packet loss.

The device may also notify an external sensing controlling entity, such as the ISF, about the upcoming change of PoA (and whether if the change is temporary). This might be used by the ISF to evaluate if a reconfiguration of the distributed (sensing) task is required.

In 706, the device changes its point of attachment and obtains a new topological IP address (SP@AN#3 in the present example).

In 707, the device signals this new IP address to the other participants of the (sensing) task by sending an (unsolicited) CATS ACK message, which includes the following information:
Service ID: an ID univocally identifying the (sensing) service;
(Sensing) processing/site ID: an ID univocally identifying the device hosting the (sensing) processing function;
(Sensor) ID: an ID univocally identifying the target (sensor) function.
CATS conditions: networking and computing requirements associated with the (sensing) service;
IP prefix: IP prefix shared by all the devices participating in the distributed (sensing) task;
(Topological) IP addr: e.g., SP@AN#3.

Optionally, this device may also inform the external sensing controlling entity (e.g., an ISF). This can be used for example to evaluate (by the sensing controller/coordinating entity) if the sensing processing function should be migrated to a different location.

In scenarios where the change to the new PoA is temporary, this message may indicate so and may include a time value, e.g., a timer, start time, end time, time duration, indicating when and/or how long the PoA may be used.

In 708, the sensors may update the tunneling configuration with the new topological IP address of the device hosting the sensing processing function as end-point.

In 709, the device signals the network that the handover to the new PoA has been completed. This may involve stopping (undoing) the temporal configuration of the transport network that was conducted in step 705 to minimize sensing data loss (e.g., undoing the bicasting and PREOF network configurations).

In 710, the sensing data traffic is now forwarded/now takes place via/through the updated tunnels.

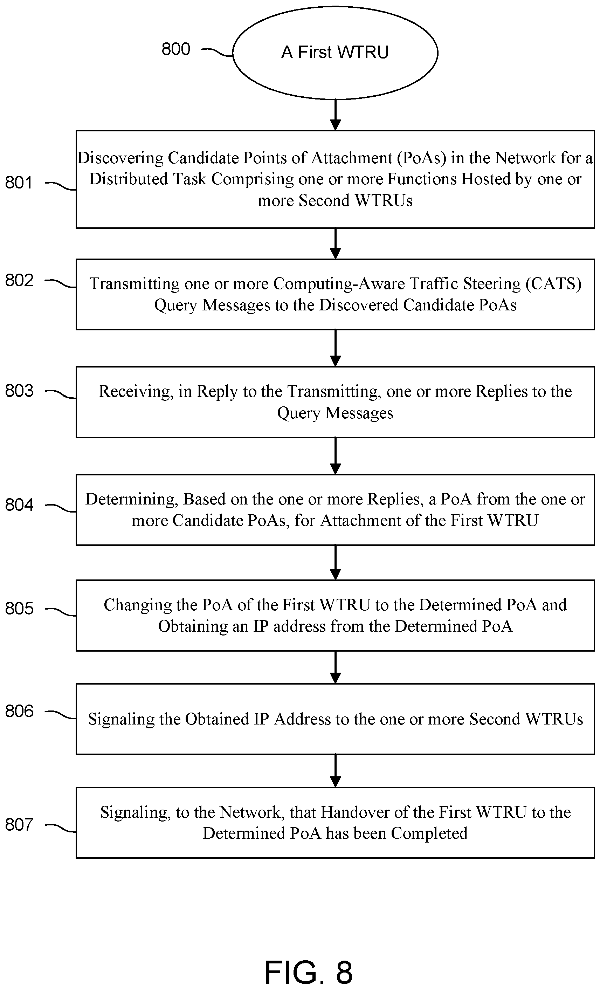

**Figure 8** is an embodiment of a method 800 for processing mobility, the method being implemented by a first WTRU in a network.

In 801, the WTRU discovers candidate points of attachment (PoAs) in the network for a distributed task comprising one or more functions hosted by one or more second WTRUs (the one or more functions being related to the distributed task; for example if the distributed task is a sensing task, the one or more functions may be sensing functions);

In 802, the WTRU transmits one or more computing-aware traffic steering (CATS) query messages to the discovered one or more candidate PoAs;

In 803, the WTRU receives, in reply to the transmitting of step 802, one or more replies to the query messages;

In 804, the WTRU determines, based on the one or more replies received in step 803, a PoA from the one or more candidate PoAs, for attachment of the first WTRU (for handover of the first WTRU from its current PoA to one of the one or more candidate PoAs);

In 805, the WTRU changes the PoA of the first WTRU to the PoA determined in step 804 (i.e., the handover from its current PoA to the determined PoA takes place) and obtains an IP address from the determined PoA;

In 806, the WTRU signals the obtained IP address to the one or more second WTRUs; and

In 807, the WTRU signals, to the network, that handover of the first WTRU to the determined PoA has been completed.

According to an embodiment of the method 800, the distributed task is a distributed sensing task.

According to an embodiment of the method 800, the discovering of step 801 is triggered by mobility of the first WTRU.

According to an embodiment of the method 800, the discovering of step 801 is triggered based on quality of connectivity of the first WTRU with the one or more second WTRUs dropping below a threshold.

According to an embodiment of the method 800, CATS query messages comprise connectivity requirements information of the distributed task;

According to an embodiment of the method 800, the connectivity requirements information comprises at least one of:
a latency threshold for data communication between a candidate POA receiver of a CATS query message and a given IP address;
a time duration of use of a candidate POA receiver of a CATS query message for the one or more functions.

According to an embodiment of the method 800, the one or more replies are at least one of:
one or more probe response messages received following transmission of a L2 probe request message sent as part of the discovering; and
one or more router advertisement messages received following transmission of an L3 router solicitation message sent as part of the discovering.

According to an embodiment of the method 800, after the determining step 804, the network is prepared for handover to the determined PoA. The preparation comprises at least one of:
setting up (configuring) bicasting in the network so that data (e.g. sensing data) from the one or more second WTRUs is duplicated to both a PoA with which the first WTRU is currently associated (to which the first WTRU is currently attached), and to the determined PoA; and
configuring the network to perform packet replication, elimination, and ordering functions (PREOF);

According to an embodiment of the method 800, the obtained IP address is signaled to the one or more second WTRUs by transmission of at least one CATS acknowledgement message comprising at least one of the following:
an identifier of a service representing the distributed task;
an identifier of the first WTRU;
conditions comprising networking and computing requirements associated with the distributed task; and
an IP prefix shared by devices participating in the distributed task.

There is also disclosed and described a WTRU in a network, the WTRU comprising at least one processor configured to:
discover candidate points of attachment, PoAs, in the network for a distributed task comprising one or more functions hosted by one or more second WTRUs;
transmit one or more computing-aware traffic steering, CATS, query messages to the one or more candidate PoAs;
receive, in reply to the transmitting, one or more replies to the query messages;
determine, based on the one or more replies, a PoA from the one or more candidate PoAs, for attachment of the first WTRU;
change the PoA of the first WTRU to the determined PoA and obtain an IP address from the determined PoA;
signal the obtained IP address to the one or more second WTRUs; and
signal, to the network, that handover of the first WTRU to the determined PoA has been completed.

According to an embodiment of the WTRU, the distributed task is a distributed sensing task.

According to an embodiment of the WTRU, the discovering is triggered by mobility of the first WTRU, e.g., because the WTRU is moved from one location to another.

According to an embodiment of the WTRU, the at least one processor is configured to trigger the discovery of the candidate PoAs based on quality of connectivity of the first WTRU with the one or more second WTRUs dropping below a threshold.

According to an embodiment of the WTRU, the CATS query messages comprise connectivity requirements information of the distributed task.

According to an embodiment of the WTRU, the connectivity requirements information comprises at least one of:
a latency threshold for data communication between a candidate POA receiver of a CATS query message and a given IP address;
a time duration of use of a candidate POA receiver of a CATS query message for the one or more functions.

According to an embodiment of the WTRU, the one or more replies are at least one of:
one or more probe response messages received following transmission of a L2 probe request message sent as part of the discovering; and
one or more router advertisement messages received following transmission of an L3 router solicitation message sent as part of the discovering.

According to an embodiment of the WTRU, the at least one processor is configured to, after the phase of determine a PoA from the one or more candidate PoAs, prepare the network for handover to the determined PoA, comprising at least one of:
configure (set up) bicasting in the network so that sensing data from the one or more second WTRUs is duplicated to both a PoA to which the first WTRU is currently attached, and to the determined PoA; and
configure the network to perform packet replication, elimination, and ordering functions (PREOF);

According to an embodiment of the WTRU, the obtained IP address is signaled to the one or more second WTRUs by transmission of at least one CATS acknowledgement message comprising at least one of the following:
an identifier of a service representing the distributed task;
an identifier of the first WTRU;
conditions comprising networking and computing requirements associated with the distributed task; and
an IP prefix shared by devices participating in the distributed task.

### Conclusion

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

The foregoing embodiments are discussed, for simplicity, with regard to the terminology and structure of wireless communication capable devices, (e.g., radio wave emitters and receivers). However, the embodiments discussed are not limited to these systems but may be applied to other systems that use other forms of electromagnetic waves or non-electromagnetic waves such as acoustic waves.

It is also to be understood that the terminology used herein is for the purpose of describing particular embodiments only, and is not intended to be limiting. As used herein, the term "video" or the term "imagery" may mean any of a snapshot, single image and/or multiple images displayed over a time basis. As another example, when referred to herein, the terms "user equipment" and its abbreviation "UE", the term "remote" and/or the terms "head mounted display" or its abbreviation "HMD" may mean or include (i) a wireless transmit and/or receive unit (WTRU); (ii) any of a number of embodiments of a WTRU; (iii) a wireless-capable and/or wired-capable (e.g., tetherable) device configured with, inter alia, some or all structures and functionality of a WTRU; (iii) a wireless-capable and/or wired-capable device configured with less than all structures and functionality of a WTRU; or (iv) the like. Details of an example WTRU, which may be representative of any WTRU recited herein, are provided herein with respect to FIGs. 1A-1D. As another example, various disclosed embodiments herein *supra* and *infra* are described as utilizing a head mounted display. Those skilled in the art will recognize that a device other than the head mounted display may be utilized and some or all of the disclosure and various disclosed embodiments can be modified accordingly without undue experimentation. Examples of such other device may include a drone or other device configured to stream information for providing the adapted reality experience.

In addition, the methods provided herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

Variations of the method, apparatus and system provided above are possible without departing from the scope of the invention. In view of the wide variety of embodiments that can be applied, it should be understood that the illustrated embodiments are examples only, and should not be taken as limiting the scope of the following claims. For instance, the embodiments provided herein include handheld devices, which may include or be utilized with any appropriate voltage source, such as a battery and the like, providing any appropriate voltage.

Moreover, in the embodiments provided above, processing platforms, computing systems, controllers, and other devices that include processors are noted. These devices may include at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory (RAM)) or non-volatile (e.g., Read-Only Memory (ROM)) mass storage system readable by the CPU. The computer readable medium may include cooperating or interconnected computer readable medium, which exist exclusively on the processing system or are distributed among multiple interconnected processing systems that may be local or remote to the processing system. It should be understood that the embodiments are not limited to the above-mentioned memories and that other platforms and memories may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost versus efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples include one or more functions and/or operations, it will be understood by those within the art that each function and/or operation within such block diagrams, flowcharts, or examples may be implemented, individually and/or collectively, by a wide range of hardware, software, firmware, or virtually any combination thereof. In an embodiment, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subj ect matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

Those skilled in the art will recognize that it is common within the art to describe devices and/or processes in the fashion set forth herein, and thereafter use engineering practices to integrate such described devices and/or processes into data processing systems. That is, at least a portion of the devices and/or processes described herein may be integrated into a data processing system via a reasonable amount of experimentation. Those having skill in the art will recognize that a typical data processing system may generally include one or more of a system unit housing, a video display device, a memory such as volatile and non-volatile memory, processors such as microprocessors and digital signal processors, computational entities such as operating systems, drivers, graphical user interfaces, and applications programs, one or more interaction devices, such as a touch pad or screen, and/or control systems including feedback loops and control motors (e.g., feedback for sensing position and/or velocity, control motors for moving and/or adjusting components and/or quantities). A typical data processing system may be implemented utilizing any suitable commercially available components, such as those typically found in data computing/communication and/or network computing/communication systems.

The herein described subject matter sometimes illustrates different components included within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermedial components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may include usage of the introductory phrases "at least one" and "one or more" to introduce claim recitations. However, the use of such phrases should not be construed to imply that the introduction of a claim recitation by the indefinite articles "a" or "an" limits any particular claim including such introduced claim recitation to embodiments including only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" is intended to include any number of items, including zero. Additionally, as used herein, the term "number" is intended to include any number, including zero. And the term "multiple", as used herein, is intended to be synonymous with "a plurality".

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.
Moreover, the claims should not be read as limited to the provided order or elements unless stated to that effect. In addition, use of the terms "means for" in any claim is intended to invoke 35 U.S.C. §112, ¶ 6 or means-plus-function claim format, and any claim without the terms "means for" is not so intended.

### REFERENCES

3GPP TS 22.837, "Feasibility Study on Integrated Sensing and Communication", Release 19, V19.0.0 (2023-06); RFC8655, ISSN 2070-1721, October 2019.

## Claims

1. A method, implemented by a first wireless transmit-receive unit, WTRU, in a network, the method comprising:
discovering candidate points of attachment, PoAs, in the network for a distributed task comprising one or more functions hosted by one or more second WTRUs;
transmitting one or more computing-aware traffic steering, CATS, query messages to the one or more candidate PoAs;
receiving, in reply to the transmitting, one or more replies to the query messages;
determining, based on the one or more replies, a PoA from the one or more candidate PoAs, for attachment of the first WTRU;
changing the PoA of the first WTRU to the determined PoA and obtaining an IP address from the determined PoA;
signaling the obtained IP address to the one or more second WTRUs; and
signaling, to the network, that handover of the first WTRU to the determined PoA has been completed.

2. The method of claim 1, wherein the distributed task is a distributed sensing task.

3. The method of claim 1, wherein the discovering is triggered by mobility of the first WTRU.

4. The method according to any of claims 1 to 3, wherein the discovering is triggered based on quality of connectivity of the first WTRU with the one or more second WTRUs dropping below a threshold.

5. The method according to any of claims 1 to 4, wherein CATS query messages comprise connectivity requirements information of the distributed task;

6. The method of claim 5, wherein the connectivity requirements information comprises at least one of:
a latency threshold for data communication between a candidate POA receiver of a CATS query message and a given IP address;
a time duration of use of a candidate POA receiver of a CATS query message for the one or more functions.

7. The method according to any of claims 1 to 6, wherein the one or more replies are at least one of:
one or more probe response messages received following transmission of a L2 probe request message sent as part of the discovering; and
one or more router advertisement messages received following transmission of an L3 router solicitation message sent as part of the discovering.

8. The method according to any of claims 1 to 7, wherein, after the determining, the network is prepared for handover to the determined PoA, comprising at least one of:
configuring bicasting in the network so that sensing data from the one or more second WTRUs is duplicated to both a PoA to which the first WTRU is currently attached, and to the determined PoA; and
configuring the network to perform packet replication, elimination, and ordering functions.

9. The method according to any of claims 1 to 8, wherein the obtained IP address is signaled to the one or more second WTRUs by transmission of at least one CATS acknowledgement message comprising at least one of the following:
an identifier of a service representing the distributed task;
an identifier of the first WTRU;
conditions comprising networking and computing requirements associated with the distributed task; and
an IP prefix shared by devices participating in the distributed task.

10. A wireless transmitter-receiver unit, WTRU, in a network, the WTRU comprising at least one processor configured to:
discover candidate points of attachment, PoAs, in the network for a distributed task comprising one or more functions hosted by one or more second WTRUs;
transmit one or more computing-aware traffic steering, CATS, query messages to the one or more candidate PoAs;
receive, in reply to the transmitting, one or more replies to the query messages;
determine, based on the one or more replies, a PoA from the one or more candidate PoAs, for attachment of the first WTRU;
change the PoA of the first WTRU to the determined PoA and obtain an IP address from the determined PoA;
signal the obtained IP address to the one or more second WTRUs; and
signal, to the network, that handover of the first WTRU to the determined PoA has been completed.

11. The WTRU of claim 10, wherein the distributed task is a distributed sensing task.

12. The WTRU of claim 10, wherein the discovering is triggered by mobility of the first WTRU.

13. The WTRU according to any of claims 10 to 12, wherein the at least one processor is configured to trigger the discovery of the candidate PoAs based on quality of connectivity of the first WTRU with the one or more second WTRUs dropping below a threshold.

14. The WTRU according to any of claims 10 to 13, wherein the at least one processor is configured to comprise, in the CATS query messages, connectivity requirements information of the distributed task.

15. The WTRU of claim 14, wherein the connectivity requirements information comprises at least one of:
a latency threshold for data communication between a candidate POA receiver of a CATS query message and a given IP address;
a time duration of use of a candidate POA receiver of a CATS query message for the one or more functions.
